Europäisches Patentamt

European Patent Office

Office européen des brevets

(11) Veröffentlichungsnummer: **0 326 221**
**A2**

# (12) EUROPÄISCHE PATENTANMELDUNG

(21) Anmeldenummer: **89200137.1**

(51) Int. Cl.⁴: **C03B 37/16**

(22) Anmeldetag: **24.01.89**

(30) Priorität: **29.01.88 DE 3802577**

(43) Veröffentlichungstag der Anmeldung:
**02.08.89 Patentblatt 89/31**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Oppenländer, Theodor**
**Graf-Adolf-Strasse 77**
**D-5000 Köln 80(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) Vorrichtung zum Ablösen einer auf Lichtwellenleiter aufgebrachten Beschichtung.

(57) Die Erfindung betrifft eine Vorrichtung zum Ablösen einer auf Lichtwellenleiter (LWL) aufgebrachten Beschichtung, mit einem Einlegeblock zur lagesichernden Aufnahme eines Längenbereiches des beschichteten LWL und mit einer nach Art eines Hobels an die Beschichtung des LWL angreifenden Schneidklinge, welche an einem drehbar am Einlegeblock gelagerten Schwenkarm befestigt ist, sowie mit einer am Einlegeblock vorgesehenen, die Eindringtiefe der Schneidklinge begrenzenden Anschlagfläche. Die Eindringtiefe der Schneidklinge in die Beschichtung des LWL ist auf einfache Weise zuverlässig dadurch vorgebbar, daß ausschließlich die Schneidklinge (7,8) unmittelbar an die Anschlagflächen (23,24) schlägt.

Fig.1

## Vorrichtung zum Ablösen einer auf Lichtwellenleiter aufgebrachten Beschichtung

Die Erfindung bezieht sich auf eine Vorrichtung zum Ablösen einer auf Lichtwellenleiter (LWL) aufgebrachten Beschichtung, mit einem Einlegeblock zur lagesichernden Aufnahme eines Längenbereiches des beschichteten LWL und mit einer nach Art eines Hobels an die Beschichtung des LWL angreifenden Schneidklinge, welche an einem drehbar am Einlegeblock gelagerten Schwenkarm befestigt ist, sowie mit einer am Einlegeblock vorgesehenen, die Eindringtiefe der Schneidklinge begrenzenden Anschlagfläche.

Eine derartige Vorrichtung ist durch die US-PS 4 434 554 bekannt. Dort schlägt der Schwenkarm, dessen Drehachse parallel zur LWL-Richtung verläuft, an der Anschlagfläche an.

Der Erfindung liegt die Aufgabe zugrunde, die Vorrichtung der eingangs genannten Art derart zu gestalten, daß die Eindringtiefe der Schneidklinge in die Beschichtung des LWL auf einfache Weise zuverlässiger vorgebbar ist.

Die Lösung gelingt dadurch, daß ausschließlich die Schneidklinge unmittelbar an die Anschlagfläche schlägt.

Erfindungsgemäß wird die Eindringtiefe unmittelbar durch den Anschlag der Schneidklinge an den Anschlagflächen bestimmt, sodaß Verschiebungen der Befestigungslage der Schneidklinge am Schwenkarm keinen Einfluß auf die Eindringtiefe haben kann.

Dabei ist es insbesondere vorteilhaft, daß der Schwenkarm mit senkrecht zur Einlegerichtung des beschichteten LWL verlaufender Drehachse am Einlegeblock derart gelagert ist, daß seine Drehebene orthogonal zu den Anschlagflächen verläuft, und daß die Schneidkante der Schneidklinge parallel zur Drehachse ausgerichtet ist. Dann ist gewährleistet, daß die Schneide linienförmig und nicht punktförmig auf den Anschlagflächen zur Anlage kommt.

Bei einer vorteilhaften Ausführungsform ist vorgesehen, daß der Schwenkarm entgegen einer Federkraft mit seiner Schneidklinge bis auf die Anschlagfläche drückbar ist. Dann sind nämlich die Schneidklingen zunächst durch Federkraft voneinander so weit entfernt, daß ein beschichteter LWL leicht in einen Einlegekanal des Einlegeblocks eingefädelt werden kann.

Eine bevorzugte Ausführungsform ist dadurch gekennzeichnet, daß am Einlegeblock zwei in die Beschichtung drückbare Schneidklingen vorgesehen sind, und daß Anschlagflächen symmetrisch zur Mittellinie einer im Einlegeblock vorgesehenen Einlegebohrung parallel zueinander in einem Abstand verlaufen, welcher geringfügig größer als der Durchmesser des unbeschichteten LWL ist. Damit können beidseitig diametral gegenüberliegende Segmentstreifen der Beschichtung gleichzeitig abgeschält werden. Die verbleibenden Beschichtungsstreifen lösen sich dann im allgemeinen selbsttätig vom LWL und können abgeschnitten werden.

Eine besonders einfach aufgebaute Vorrichtung ergibt sich dadurch, daß beide Schneidklingen an gleichartigen Schwenkarmen der in den Ansprüchen 2 oder 3 gekennzeichneten Art befestigt sind.

Die Erfindung und ihre Vorteile werden anhand der Beschreibung eines in der Zeichnung dargestellten besonders vorteilhaften Ausführungsbeispiels näher erläutert.

Fig. 1 zeigt einen Längsschnitt durch eine erfindungsgemäße Vorrichtung.

Fig. 2 zeigt in Seitenansicht eine Vorrichtung nach Fig. 1 beim Schälvorgang.

Fig. 3 zeigt in stark vergrößertem Maßstab einen Querschnitt durch einen beschichteten LWL.

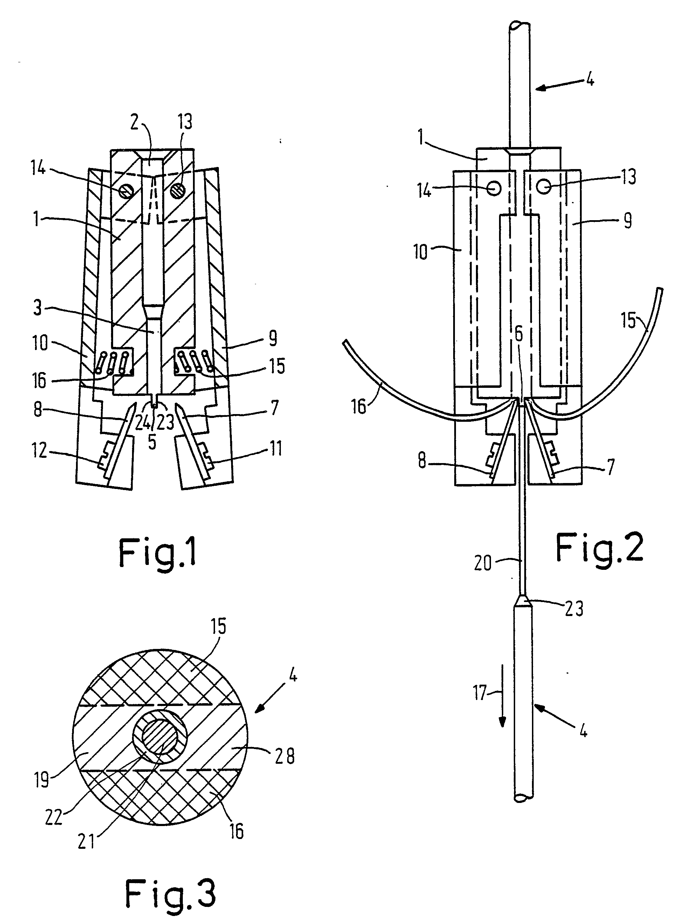

Im Einlegeblock 1 befindet sich eine Einlegebohrung 2, deren Durchmesser im Endbereich 3 mit geringem Übermaß dem Durchmesser eines beschichteten LWL 4 (Fig. 2) angepaßt ist. Beidseitig neben der Austrittsfläche des Endbereichs 3 ragen zwei Ansätze 5 und 6 (Fig. 2) aus der Stirnfläche des Einlegeblocks 1 hervor, welcher sich senkrecht zur Zeichenebene fluchtend gegenüberliegen und gemeinsam obere und untere Anschlagflächen 23 und 24 für eine obere Schneidklinge 7 und eine untere Schneidklinge 8 bilden. Die oberen und die unteren Anschlagflächen 23 bzw. 24 der Anschläge 5 und 6 liegen jeweils in einer gemeinsamen Ebene, welche parallel zueinander symmetrisch zur Mittellinie der Einlegebohrung 2 verlaufen.

Die Schneidklingen 7 und 8 sind an Schwenkarmen 9 bzw. 10 mittels Schrauben 11 bzw. 12 befestigt. Die Schwenkarme 9 und 10 sind jeweils über Drehachsen 13 bzw. 14 am Einlegeblock 1 gelagert, sodaß die Schneidklingen 7 und 8 entgegen der Rückstellkraft der Federn 15 bzw. 16 bis an die Anschlagflächen 23 bzw. 24 der Ansätze 5 und 6 führbar sind. Die Drehachsen 13 und 14 verlaufen senkrecht zur Richtung der Einlegebohrung 3 und parallel zu den Ebenen der Anschlagflächen 23 und 24 sowie ebenfalls parallel zu den Schneidkanten der Schneidklingen 7 und 8.

In Fig. 2 ist erkennbar, wie Segmentstreifen 15 und 16 der den LWL 20 umgebenden Kunststoffbeschichtung 23 abgehobelt werden, wenn der beschichtete LWL 4 in Richtung des Pfeils 17 durch die Ablösevorrichtung gezogen wird. Dabei werden die Schwenkarme 9 und 10 fest gegeneinander gedrückt, sodaß sich die Schneidkanten der Schneidklingen 7 und 8 in die Kunststoffbeschichtung 23 eingraben, bis sie an den Anschlagflächen 23 bzw. 24 der Ansätze 5 und 6 zum Anliegen kommen.

Wie Fig. 3 als Querschnitt durch den beschichteten LWL 4 (Außendurchmesser 0,9 mm) zeigt, verbleiben von der Kunststoffbeschichtung 23 nach dem Abschälen der Segmentstreifen 15 und 16 Seitenstreifen 18 und 19 am LWL 20, dessen aus Quarzglas bestehender optisch wirksamer Kern 21 (Außendurchmesser 0,125 mm) von einer Primärcoating-Schicht 22 (Außendurchmesser 0,25 mm) umhüllt ist, welche beim Abhobelvorgang nicht beschädigt werden darf.

Nach dem Abhobeln der Segmentstreifen 15 und 16 bis zu den gestrichelt gezeichneten Trennlinien lösen sich die Seitenstreifen 18 und 19 im allgemeinen selbsttätig von der Oberfläche der Primärcoating-Schicht 22 und können dann abgeschnitten werden.

**Ansprüche**

1. Vorrichtung zum Ablösen einer auf Lichtwellenleiter (LWL) aufgebrachten Beschichtung, mit einem Einlegeblock zur lagesichernden Aufnahme eines Längenbereiches des beschichteten LWL und mit einer nach Art eines Hobels an die Beschichtung des LWL angreifenden Schneidklinge, welche an einem drehbar am Einlegeblock gelagerten Schwenkarm befestigt ist, sowie mit einer am Einlegeblock vorgesehenen, die Eindringtiefe der Schneidklinge begrenzenden Anschlagfläche, dadurch gekennzeichnet, daß die Schneidklinge (7,8) unmittelbar an die Anschlagflächen (23,24) schlägt.

2. Vorrichtung nach Anspruch 1, dadurch gekennzeichnet, daß ausschließlich der Schwenkarm (9,10) mit senkrecht zur Einlegerichtung des beschichteten LWL (4) verlaufender Drehachse (13,14) am Einlegeblock (1) derart gelagert ist, daß seine Drehebene orthogonal zu den Anschlagflächen (23,24) verläuft, und daß die Schneidkante der Schneidklinge (7,8) parallel zur Drehachse (13,14) ausgerichtet ist.

3. Vorrichtung nach Anspruch 1 oder 2, dadurch gekennzeichnet, daß der Schwenkarm (9,10) entgegen einer Federkraft (15,16) mit seiner Schneidklinge (7,8) bis auf die Anschlagfläche (23,24) drückbar ist.

4. Vorrichtung nach einem der Ansprüche 1 bis 3, dadurch gekennzeichnet, daß am Einlegeblock (1) zwei in die Beschichtung (23) drückbare Schneidklingen (7,8) vorgesehen sind, und daß Anschlagflächen (23,24) symmetrisch zur Mittellinie einer im Einlegeblock (1) vorgesehenen Einlegebohrung (2) parallel zueinander in einem Abstand verlaufen, welcher geringfügig größer als der Durchmesser des unbeschichteten LWL (20) ist.

5. Vorrichtung nach Anspruch 4, dadurch gekennzeichnet, daß beide Schneidklingen (7,8) an gleichartigen Schwenkarmen (9,10) der in den Ansprüchen 2 oder 3 gekennzeichneten Art befestigt sind.

Fig.1

Fig.2

Fig.3